# EUROPÄISCHE PATENTSCHRIFT

(11) **EP 1 546 590 B1**
(45) Veröffentlichungstag und Bekanntmachung des Hinweises auf die Patenterteilung: **23.04.2008**
(21) Anmeldenummer: 03807773.1
(22) Anmeldetag: 04.08.2003
(51) Int. Cl.: F16K 31/06

(54) **ELEKTROMAGNETVENTIL**
SOLENOID VALVE
SOUPAPE ELECTROMAGNETIQUE

(30) Priorität: 27.09.2002 DE 10245067; 15.03.2003 DE 10311486
(43) Veröffentlichungstag der Anmeldung: 29.06.2005
(73) Patentinhaber: Continental Teves AG & Co. oHG, 60488 Frankfurt (DE)
(72) Erfinder: SEITZ, Karlheinz, 64653 Lorsch (DE); SCHULZ, Christian, 64560 Riedstadt (DE)
(86) Internationale Anmeldenummer: PCT/EP2003/008611
(87) Internationale Veröffentlichungsnummer: WO 2004/033945

(56) Entgegenhaltungen:
- EP-A- 1 008 790
- DE-A- 10 016 599
- DE-A- 10 141 134
- US-A- 3 133 234
- US-A- 3 653 630
- PATENT ABSTRACTS OF JAPAN vol. 013, no. 413 (E-820), 12. September 1989 (1989-09-12) & JP 01 151236 A (MITSUBISHI ELECTRIC CORP), 14. Juni 1989 (1989-06-14)

## Beschreibung

Die Erfindung betrifft ein Elektromagnetventil nach dem Oberbegriff des Patentanspruchs 1.

In der EP-A-1 008 790 ist ein Elektromagnetventil offenbart, dessen Magnetanker an der Stirnfläche mehrere radial angeordnete Nuten aufweist, die einer zwischen dem Magnetanker und einem Magnetkern angeordneten Scheibe zugewandt sind. Durch die nutförmige Stirnflächengestaltung des Magnetankers wird das Anhaften der Scheibe am Magnetanker vermieden.

Aus der DE 100 16 599 A1 ist bereits ein Elektromagnetventil der gattungsbildenden Art bekannt geworden, dessen zwischen dem Magnetkern und dem Magnetanker angeordnetes Federelements einen fluidischen Widerstand hervorruft, der die Entlüftung und Befüllung des oberhalb des Federelements gelegenen Hohlraums mit Hydraulikflüssigkeit erschwert.

Daher ist es die Aufgabe der vorliegenden Erfindung, ein Elektromagnetventil der gattungsbildenden Art unter Beibehaltung eines möglichst einfachen Aufbaus derart zu verbessern, dass vorgenannter Nachteil vermieden wird.

Diese Aufgabe wird erfindungsgemäß für ein Elektromagnetventil der angegebenen Art mit den kennzeichnenden Merkmalen des Patentanspruchs 1 gelöst.

Weitere Merkmale, Vorteile und Anwendungsmöglichkeiten der Erfindung gehen aus den Unteransprüchen hervor und werden anhand mehrerer Zeichnungen nachfolgend erläutert.

Es zeigen:
- Fig. 1: einen Längsschnitt durch ein in der Grundstellung stromlos offenes Elektromagnetventil mit Ausnehmungen am Magnetkern,
- Fig. 2: eine Vergrößerung der erfindungswesentlichen Einzelheiten für das Elektromagnetventil nach Figur 1,
- Fig. 3: einen Ausschnitt des Elektromagnetventils nach Figur 1 in einer elektromagnetisch erregten Stellung des Magnetankers,
- Fig. 4: eine Abwandlung des aus den Figuren 1-3 bekannten Federelements.

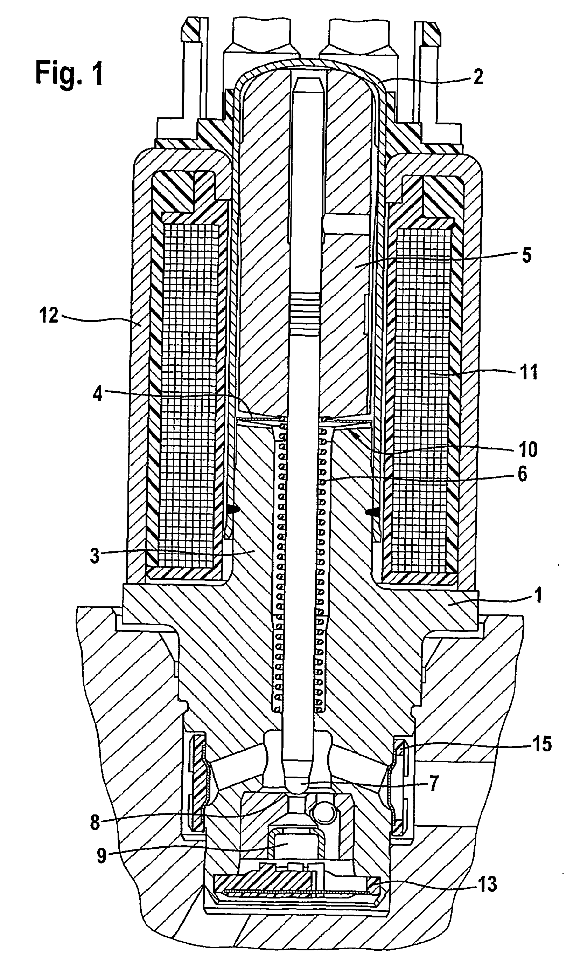

In der Fig. 1 ist eine Anwendung der Erfindung für ein elektromagnetisch nicht erregtes, in Grundstellung geöffnetes Elektromagnetventil gezeigt, dessen Ventilgehäuse 1 beispielhaft in Patronenbauweise ausgeführt ist. Das Oberteil des Ventilgehäuses 1 ist als dünnwandige Ventilhülse 2 gestaltet, in deren domförmig geschlossenem Bereich ein zylinderförmiger Magnetanker 5 geführt ist. Unterhalb des Magnetankers 5 befindet sich der hohlzylindrische Magnetkern 3. Der Magnetkern 3 nimmt innerhalb seiner Stufenbohrung eine an sich bekannte Feder 6 mit linearem Kennlinienverlauf auf, die sich als Schraubendruckfeder mit ihrem einen Windungsende auf die Stirnfläche des Magnetankers 5 erstreckt. Der Magnetanker 5 ist folglich unter der Wirkung der Feder 6 mit dem stößelförmigen Ventilschließglied 7 von einem Ventilsitz 8 im Ventilgehäuse 1 abgehoben, wodurch ein das Ventilgehäuse 1 in Horizontal- und Vertikalrichtung durchdringender Druckmittelkanal 9 in der abbildungsgemäßen Ventilgrundstellung freigegeben ist. Das stößelförmige Ventilschließglied 7 ist vorzugsweise mittels einer Presspassung im Magnetanker 5 fixiert und an seinem dem Ventilsitz 8 zugewandten Endabschnitt 8 in einem Führungsabschnitt des Ventilgehäuses 1 zentriert.

Durch eine auf dem Ventilgehäuse 1 angebrachte Ventilspule 11 und einen die Ventilspule 11 teilweise umschließenden Jochring 12 lässt sich durch eine Erregung der Ventilspule 11 der Magnetkreis schließen und der Magnetanker 5 in Richtung auf den Magnetkern 3 bewegen.

Durch die Anordnung eines Federelementes 4 im Luftspalt zwischen dem Magnetanker 5 und dem Magnetkern 3 wird die Magnetkraft FM virtuell geschwächt, wozu die Charakteristik des Federelementes 4 derart ausgelegt ist, dass die resultierende Magnetkraft FM bei Annäherung des Magnetankers 5 an den Magnetkern 3 und damit scheinbar mit zunehmendem Ventilhub s schneller abnimmt als die aus dem hydraulischen Druck am Ventilschließglied 7 resultierende Stößelkraft, die im wesentlichen durch die hydraulische Beaufschlagung des Stößels festgelegt ist. Hierdurch kann entweder mittels geeigneter elektrischer Stromregelung in der Ventilspule 11 bei jeweils konstantem Hydraulikdruck oder aber durch Regelung des Drucks bei jeweils konstantem Ventilspulenstrom jede beliebige Ventilhubposition zwischen den bistabilen Hubgrenzlagen eingestellt werden. Man hat damit die Möglichkeit, das Elektromagnetventil nicht nur als 2-Wegeventil, sondern auch im Analogbetrieb als Volumenstromregelventil zu betreiben.

Damit unter Anwendung der erfindungsgemäßen Merkmale das Elektromagnetventil einwandfrei funktionieren kann, erfolgt die Zuströmung und damit die Druckbeaufschlagung des Ventilschließgliedes 7 abbildungsgemäß von unten, d.h. stromaufwärts des Ventilschließgliedes 7 über den den vertikalen Druckmittelkanal 9 abdeckenden Plattenfilter 13 in Richtung auf die Stirnfläche des geöffneten Ventilschließgliedes 7 zu den das Ventilgehäuse 1 auf der Höhe des Ringfilters 15 durchquerenden Druckmittelkanälen 9.

In einer elektromagnetisch nicht erregten Ventilschaltstellung ist der Magnetanker 5 durch die Feder 6 in einem definierten Axialabstand vom Magnetkern 3 positioniert, so dass der Magnetanker 5 vom Magnetkern 3 durch einen Zwischenraum getrennt ist, in dem das ringscheibenförmige Federelement 4 lose angeordnet ist. Ferner ist im Bereich des Zwischenraums wenigstens ein Mittel 10 vorgesehen, das die Umströmung des Federelements 4 begünstigt. Das Mittel ist als eine am Magnetkern 3 und/oder auch am Federelement 4 angeordnete Ausnehmung 10 ausgeführt, die gemäß der Figur 1 an der dem Federelement 4 zugewandten Stirnfläche des Magnetkerns 3 in Form einer Quernut dargestellt ist, die sich vom Innendurchmesser des Magnetkerns 3 zum Außendurchmesser des hohlzylindrischen Magnetkerns 3 erstreckt.

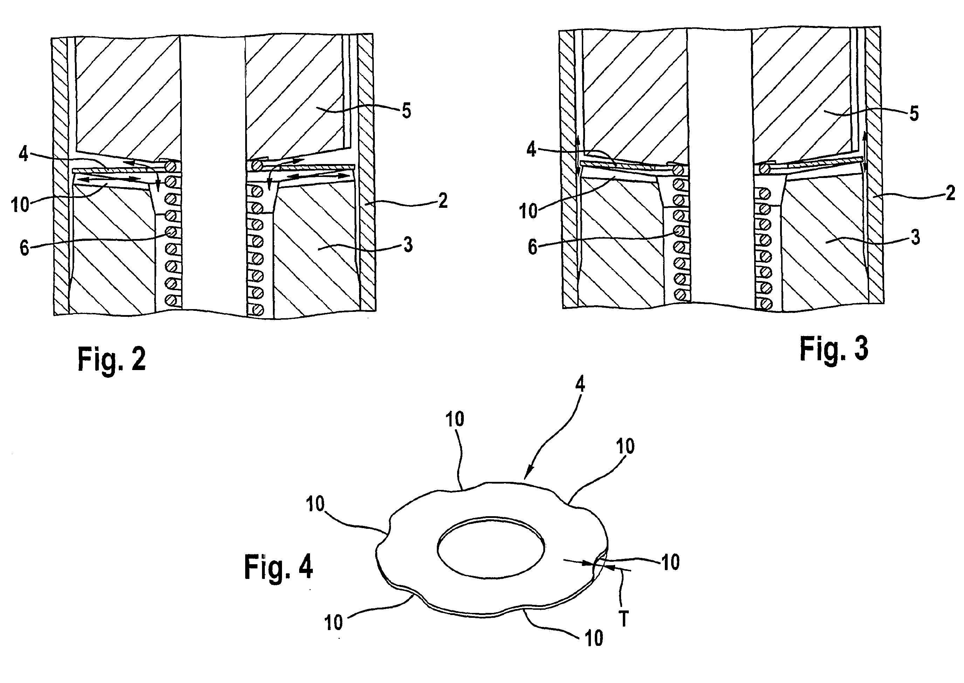

Die Fig. 2 zeigt hierzu eine vergrößerte, teilweise Darstellung des Magnetkerns 3 und des Magnetankers 5 mit den entsprechenden erfindungswesentlichen Einzelheiten des Elektromagnetventils nach Fig. 1. Im einzelnen lässt sich unter Berücksichtigung der Erläuterungen zu Fig. 1 nunmehr aus der Fig. 2 die elektromagnetisch nicht erregte, offene Ventilschaltstellung deutlich erkennen, in der das ringscheibenförmige Federelement 4 mit seinem Außenrand an der Oberkante der nach innen schräg zulaufenden Stirnfläche des Magnetkerns 3 anliegt, während der Innenrand des planen Federelementes 4 im Bereich der die Feder 6 aufweisenden Öffnung von der Unterkante des der Stirnfläche des Magnetkerns 3 axial beabstandet ist. Gleichzeitig besteht auch zwischen dem Innenrand des Federelements 4 und der Stirnfläche des Magnetankers 5 ein Axialabstand. Der zwischen den Stirnflächen des Magnetankers 5 und des Magnetkerns 3 bestehende Axialabstand entspricht somit nach Berücksichtigung der Dicke des Federelementes 4 dem maximalen Magnetankerhub X und wird zur Evakuierung als auch zur Befüllung des oberhalb des Federelements 4 gelegenen Hohlraums (Magnetankerraums) mit Hydraulikflüssigkeit benötigt.

In der Figur 2 sind die Evakuier- und Befüllwege mittels Pfeile verdeutlicht. Hierbei ist zu beachten, dass die Evakuierung als auch die Befüllung des Magnetankerraums von unten durch die Bohrung des Magnetkerns 3 erfolgt. Folglich pflanzt sich zur Evakuierung des Magnetankerraums das Vakuum zunächst entlang der Feder 6 nach oben zur Stirnfläche des Magnetkerns 3 fort. Da in die Stirnfläche des Magnetkerns 3 mehrere nutförmige Ausnehmungen 10 eingebracht sind, gelangt das Vakuum nicht nur über den Innenrand des Federelements 4 zur Stirnfläche des Magnetankers 5 und von dort entlang der Oberseite des Federelements 4 in den Magnetankerraum, sondern auch entlang den Ausnehmungen 10 des Magnetkerns 3 und damit entlang der Unterseite des Federelements 4 zum Außenrand des Federelements 4, so dass über dessen Radialabstand zur Ventilhülse 2 gleichfalls eine Verbindung zum Magnetankerraum besteht. Wie bereit erwähnt, werden die für den Evakuierprozess erläuterten Wege auch vorteilhaft zur Befüllung des Magnetankerraums benutzt.

In der Figur 3 wird abweichend von Figur 2 die elektromagnetisch erregte Schaltstellung des Magnetankers 5 gezeigt, wodurch die nach innen konisch zulaufende Stirnfläche des Magnetankers 5 von oben auf den Innenrand des Federelements 4 drückt und dieses elastisch vorspannt. Zwangsläufig ist der aus Figur 2 bekannte, normalerweise über den Innenrand des Federelements 4 verlaufende Druckmittelweg abgesperrt, so dass infolge der Ausnehmung 10 am Magnetkern 3 vorteilhaft eine Druckmittelverbindung zwischen den beiderseits des Federelements 4 gelegenen Hohlräume entlang dem Außenrand des Federelements 4 gewährleistet ist.

Das Federelement 4 ist aus herstelltechnischen Gründen vereinfacht als ebene Platte bzw. Lochscheibe ausgeführt, die zwischen den schrägen Stirnflächen des Magnetankers 5 und des Magnetkerns 3 eingelegt ist. Im vorliegenden Ausführungsbeispiel ist die Stirnfläche des Magnetkerns 3 in Richtung des Federelementes 4 konkav bzw. trichterförmig erweitert, während die Stirnfläche des Magnetankers 5 konisch zuläuft und damit konvex ist. Ein Vertauschen der Stirnflächengeometrie ist denkbar. Die Erfindung bleibt hiervon unbeeinträchtigt und es ergibt sich gleichfalls die eine Tellerfeder charakteristische, vorteilhafte progressive Federkennlinie für das ebene, ringscheibenförmige Federelement 4.

Die Figur 4 zeigt in einer vergrößerten Perspektivdarstellung das Federelement 4, das am Außenumfang mehrere Ausnehmungen 10 aufweist, die aus kreisbogenförmigen Ausschnitten bestehen, die gleichmäßig am Außenumfang des Federelements 4 verteilt sind. Die Geometrie der kreisbogenförmigen Ausschnitte ist derart gewählt, dass die maximal auftretende Spannungsverteilung gleichbleibend entlang des Innenumfangs am Federelement (4) ist und im Vergleich zu einer Lochscheibe nicht erhöht ist und keine Spannungsspitzen am Außenumfang des Federelements (4) erzeugt werden. Die Ausnehmungen 10 sind vorzugsweise im Winkelabstand von 60 Grad am Außenumfang des Federelements 4 angeordnet, wobei die maximale Tiefe T der Ausnehmungen 10 zwischen 8% und 12% des Federaußendurchmessers beträgt. Das Federelement 4 besteht aus Federstahl, vorzugsweise Kaltband, in das die Ausnehmungen 10 kostengünstig und präzise eingeätzt sind.

Durch die am Außenumfang des Federelements 4 angeordneten Ausnehmungen 10 wird ein alternatives bzw. die Ausführungen zu Figur 2, 3 ergänzendes Mittel zur verbesserten Umströmung des Federelements 4 vorgeschlagen, das unabhängig von der Schaltstellung des Magnetankers 5 einen permanenten Durchlass zwischen der Stirnfläche des Magnetkerns 3 und dem durch die bogenförmige Ausnehmung 10 eingezogenen Außenrand des Federelements 4 ermöglicht.

Somit ergeben sich bei der Verwendung des Federelements 4 nach Figur 4 anstelle des in den Figuren 1-3 beschriebenen Federelements 4 mit konstantem Kreisumfang gleichwertige Strömungsverhältnisse wie sie explizit in den Figuren 2, 3 dargestellt sind, jedoch mit dem entscheidenden Vorteil, dass die Ausnehmungen 10 im Magnetkern 3 nicht mehr zwingend erforderlich sind. Das Anbringen der Ausnehmungen 10 am Umfang des Federelements 4 ermöglicht gegenüber dem Lösungsvorschlag nach den Figuren 1-3 überdies größere Strömungsquerschnitte und eine einfachere Herstellung.

Dem Fachmann bleibt schließlich im Einzelfall überlassen, welches der beiden vorgeschlagenen Mittel (Ausnehmungen 10 entweder am Federelement 4 oder am Magnetkern 3) er verwendet oder ob er beide Mittel (Ausnehmungen 10 am Magnetkern als auch am Federelement 4) kombiniert, um zu einer möglichst vollkommenen Evakuierung als auch Flüssigkeitsbefüllung aller Hohlräume des Elektromagnetventils zu gelangen.

### Bezugszeichenliste

- 1: Ventilgehäuse
- 2: Ventilhülse
- 3: Magnetkern
- 4: Federelement
- 5: Magnetanker
- 6: Feder
- 7: Ventilschließglied
- 8: Ventilsitz
- 9: Druckmittelkanal
- 10: Ausnehmung
- 11: Ventilspule
- 12: Jochring
- 13: Plattenfilter
- 14: -
- 15: Ringfilter

## Patentansprüche

1. Elektromagnetventil, insbesondere für Kraftfahrzeug-Radschlupfregelsysteme, mit einem Ventilgehäuse (1), in dem ein Ventilschließglied (7) beweglich geführt ist, mit einem am Ventilschließglied (7) angebrachten Magnetanker (5), der in Abhängigkeit von der elektromagnetischen Erregung einer am Ventilgehäuse (1) angebrachte Ventilspule (11) innerhalb einer Ventilhülse (2) eine Hubbewegung in Richtung eines im Ventilgehäuse (1) angeordneten Magnetkerns (3) vollzieht sowie mit einer Feder (6), die in der elektromagnetisch nicht erregten Ventilstellung den Magnetanker (5) in einem definierten Axialabstand vom Magnetkern (3) positioniert, so dass der Magnetanker (5) vom Magnetkern (3) durch einen Zwischenraum getrennt ist, in dem ein ringscheibenförmiges Federelement (4) angeordnet ist, das der Bewegung des Magnetankers (5) entgegenwirkt, sowie mit einem oberhalb des Federelements (4) angeordneten Magnetankerraum, **dadurch gekennzeichnet, dass** im Bereich des Zwischenraums wenigstens ein Mittel vorgesehen ist, das die Umströmung des Federelements (4) unabhängig von der Stellung des Magnetankers (5) ermöglicht, dass das Mittel als eine an der Stirnfläche des Magnetkerns (3) angeordnete, dem Federelement (4) zugewandte Ausnehmung (10) ausgeführt ist, die sich vom Innendurchmesser zum Außendurchmesser des hohlzylindrischen Magnetkerns (3) erstreckt, wobei eine Evakuierung und Befüllung des Magnetankerraums durch eine Bohrung des Magnetkerns (3) sowie entlang der Ausnehmung (10) zum Außenrand des Federelements (4) erfolgt, über dessen Radialabstand zur Ventilhülse (2) eine Verbindung zum Magnetankerraum herstellbar ist.

2. Elektromagnetventil nach Anspruch 1, **dadurch gekennzeichnet, dass** am Federelement (4) eine Ausnehmung (10) ausgeführt ist.

3. Elektromagnetventil nach Anspruch 1, **dadurch gekennzeichnet, dass** die Ausnehmung (10) die Form einer Quernut aufweist.

4. Elektromagnetventil nach Anspruch 2, **dadurch gekennzeichnet, dass** das Federelement (4) am Außenumfang mehrere Ausnehmungen (10) aufweist, die aus kreisbogenförmigen Ausschnitten bestehen, die gleichmäßig am Außenumfang des Federelements (4) verteilt sind.

5. Elektromagnetventil nach Anspruch 4, **dadurch gekennzeichnet, dass** die Geometrie der kreisbogenförmigen Ausschnitte derart gewählt sind, dass die maximal auftretende Spannungsverteilung gleichbleibend entlang des Innenumfangs des Federelements (4) ist, wobei keine Spannungsspitzen am Außenumfang des Federelements (4) wirksam sind.

6. Elektromagnetventil nach Anspruch 4, **dadurch gekennzeichnet, dass** die Ausnehmungen (10) vorzugsweise im Winkelabstand von 60 Grad am Außenumfang des Federelements (4) verteilt sind, und dass die maximale Tiefe (T) der Ausnehmungen (10) zwischen 8% und 12% des Federaußendurchmessers beträgt.

7. Elektromagnetventil nach einem der vorangegangenen Ansprüche, **dadurch gekennzeichnet, dass** das Federelement (4) aus Federstahl, vorzugsweise Kaltband besteht, in das die Ausnehmungen (10) geätzt sind.

## Claims

1. Solenoid valve, in particular for wheel slip control systems of motor vehicles, comprising a valve housing (1) in which a valve closure member (7) is movably guided, with an armature (5) fitted at the valve closure member (7) and performing a stroke movement within a valve sleeve (2) in the direction of a magnet core (3) arranged in the valve housing (1) depending on the electromagnetic energization of a valve coil (11) fitted at the valve housing (1), and with a spring (6) which positions the armature (5) at a defined axial distance from the magnet core (3) in the electromagnetically non-energized valve position so that the armature (5) is separated from the magnet core (3) by a space in which an annular-disc-shaped spring element (4) is arranged, which latter counteracts the movement of the armature (5), and with an armature chamber arranged above the spring element (4),
**characterized in that** provided in the area of the space is at least one means which allows fluid flow around the spring element (4) irrespective of the position of the armature (5), **in that** the means is designed as a recess (10) arranged at the end face of the magnet core (3) and facing the spring element (4), the said recess extending from the inside diameter to the outside diameter of the hollow-cylindrical magnet core (3), in which case an evacuation and filling of the armature chamber takes place through a bore of the magnet core (3) and along the recess (10) to the outside edge of the spring element (4), and a connection to the armature chamber can be established by way of the radial distance of the spring element from the valve sleeve (2).

2. Solenoid valve as claimed in claim 1,
**characterized in that** a recess (10) is provided at the spring element (4).

3. Solenoid valve as claimed in claim 1,
**characterized in that** the recess (10) has the shape of a transverse groove.

4. Solenoid valve as claimed in claim 2,
**characterized in that** the spring element (4) includes several recesses (10) on the outside periphery which consist of circular-arc-shaped cut-outs evenly distributed on the outside periphery of the spring element (4).

5. Solenoid valve as claimed in claim 4,
**characterized in that** the geometry of the circular-arc-shaped cut-outs is chosen in such a fashion that the maximum occurring distribution of tension is constant along the inside periphery of the spring element (4), and no tension peaks are active on the outside periphery of the spring element (4).

6. Solenoid valve as claimed in claim 4,
**characterized in that** the recesses (10) are distributed on the outside periphery of the spring element (4) preferably at an angular distance of 60 degrees, and **in that** the maximum depth (T) of the recesses (10) amounts to 8 % and 12 % of the outside diameter of the spring.

7. Solenoid valve as claimed in any one of the preceding claims,
**characterized in that** the spring element (4) consists of spring steel, preferably cold rolled strip, into which the recesses (10) are etched.

## Revendications

1. Soupape électromagnétique, en particulier pour systèmes de régulation du patinage de véhicule automobile, avec un boîtier de soupape (1) dans lequel un obturateur de soupape (7) est guidé déplaçable, avec une palette magnétique (5) placée sur l'obturateur de soupape et qui exécute, en fonction de l'excitation électromagnétique d'une bobine de soupape (11) placée sur le boîtier de soupape (1), à l'intérieur d'une douille de soupape (2), une course en direction d'un noyau magnétique (3) disposé dans le boîtier de soupape (1), ainsi qu'avec un ressort (6), qui dans la position non excitée électromagnétiquement de la soupape, positionne la palette magnétique (5) à une distance axiale définie du noyau magnétique (3), ce qui fait que la palette magnétique (5) est séparée du noyau magnétique (3) par un interstice dans lequel est disposé un élément de ressort (4) en forme de disque annulaire, qui s'oppose au mouvement de la palette magnétique (5), ainsi qu'avec une chambre de palette magnétique disposée au-dessus de l'élément de ressort (4), **caractérisée en ce que** dans la zone de l'interstice il est prévu au moins un moyen qui permet la circulation autour de l'élément de ressort (4), indépendamment de la position de la palette magnétique (5), **en ce que** le moyen est réalisé sous la forme d'un évidement (10) disposé sur la face frontale du noyau magnétique (3) et tourné vers l'élément de ressort (4), lequel évidement s'étend depuis le diamètre intérieur vers le diamètre extérieur du noyau magnétique (3) cylindrique creux, une mise sous vide et un remplissage de la chambre de palette magnétique s'effectuant à travers un alésage du noyau magnétique (3) ainsi que le long de l'évidement (10) vers le bord extérieur de l'élément de ressort (4), dont la distance radiale par rapport à la douille de soupape (2) permet de réaliser une liaison avec la chambre de palette magnétique.

2. Soupape électromagnétique selon la revendication 1, **caractérisé en ce que** sur l'élément de ressort (4) est réalisé un évidement (10).

3. Soupape électromagnétique selon la revendication 1, **caractérisé en ce que** l'évidement (10) présente la forme d'une rainure transversale.

4. Soupape électromagnétique selon la revendication 2, **caractérisé en ce que** l'élément de ressort (4) présente sur le pourtour extérieur plusieurs évidements (10) qui sont constitués de découpes en forme d'arc de cercle, lesquelles sont uniformément réparties sur le pourtour extérieur de l'élément de ressort (4).

5. Soupape électromagnétique selon la revendication 4, **caractérisé en ce que** la géométrie des découpes en forme d'arc de cercle est choisie de manière que la distribution des contraintes maximales qui se produisent soit constante le long du pourtour intérieur de l'élément de ressort (4), aucune pointe de contrainte n'agissant sur le pourtour extérieur de l'élément de ressort (4).

6. Soupape électromagnétique selon la revendication 4, **caractérisé en ce que** les évidements (10) sont répartis de préférence à une distance angulaire de 60 degrés sur le pourtour extérieur de l'élément de ressort (4), et **en ce que** la profondeur maximale (T) des évidements (10) est comprise entre 8 % et 12 % du diamètre extérieur du ressort.

7. Soupape électromagnétique selon l'une quelconque des revendications précédentes, **caractérisé en ce que** l'élément de ressort (4) est en acier à ressort, de préférence dans un feuillard laminé à froid dans lequel sont gravés les évidements (10).
